# EUROPÄISCHE PATENTSCHRIFT

(11) **EP 2 529 865 B1**
(45) Veröffentlichungstag und Bekanntmachung des Hinweises auf die Patenterteilung: **11.01.2017**
(21) Anmeldenummer: 11405360.6
(22) Anmeldetag: 21.11.2011
(51) Int. Cl.: B23B 29/24, B23B 31/26

(54) **Revolverscheibe für ein Bearbeitungswerkzeug**
Turret for a machining tool
Tourelle revolver pour un outil d'ousinage

(30) Priorität: 31.05.2011 CH 928112011
(43) Veröffentlichungstag der Anmeldung: 05.12.2012
(73) Patentinhaber: Su-Matic Corp, 5201 Brugg (CH)
(72) Erfinder: Sinisgalli, Riccardo, 44100 Ferrara (FE) (IT); Clo, Moreno, 40037 Sasso Marconi (BO) (IT)
(74) Vertreter: Gachnang, Hans Rudolf

(56) Entgegenhaltungen:
- DE-A1- 3 926 480
- DE-A1-102009 022 199
- DE-U1- 20 319 597
- DE-U1- 29 604 036
- JP-U- 61 012 655
- US-A- 4 872 244

## Beschreibung

Gegenstand der Erfindung ist eine Revolverscheibe für ein Bearbeitungswerkzeug gemäss dem Oberbegriff des Patentanspruchs 1.

Eine solche Revolverscheibe ist aus der DE 20319597 U bekannt.

Revolverscheiben werden insbesondere an CNC-Werkzeugmaschinen wie z.B. Drehzentren eingesetzt, um stets eine grössere Anzahl von Werkzeugen einsatzbereit zu haben und damit eine vollautomatische Bearbeitung eines Werkstücks mit unterschiedlichen Werkzeugen vornehmen zu können, ohne einen Werkzeugwechsel und damit Stillstand der Maschine zu verursachen. Auf den Revolverscheiben werden Werkzeughalter befestigt, die ihrerseits die Werkzeuge, beispielsweise Wendeplattenhalter, Fräser, Bohrer etc. aufnehmen. Die Befestigung der Werkzeughalter erfolgt in meist peripher an der Revolverscheibe radial verlaufenden Bohrungen für die unterschiedlichen Werkzeugsysteme und die Befestigung der Werkzeuge an den Werkzeughaltern mit aus dem Stand der Technik bekannten Spannvorrichtungen. Diese von der Stirnseite her betätigbaren Spannvorrichtungen in den bekannten Werkzeughaltern haben den Nachteil, dass diese radial verhältnismässig weit radial nach aussen über die Peripherie der Revolverscheibe ragen und dadurch die Werkzeuglänge über der Revolverscheibenperipherie (radial gemessen) verhältnismässig gross wird bzw. die radiale Bearbeitungstiefe entsprechend verkleinert wird.

Eine Aufgabe der vorliegenden Erfindung besteht nun darin, die Revolverscheibe und den Werkzeughalter derart weiter auszubilden, damit eine zusätzliche radiale Werkzeuglänge gewonnen werden kann, ohne den Durchmesser der Revolverscheibe zu verkleinern und dass die vorhandenen Revolverscheiben mit minimalem Aufwand umgerüstet und weiterbenutzt werden können.

Gelöst wird diese Aufgabe durch eine Revolverscheibe gemäss den Merkmalen des Patentanspruchs 1. Vorteilhafte Ausgestaltungen der Revolverscheibe und des Werkzeughalters werden in den abhängigen Ansprüchen umschrieben.

Durch die Verlegung der Spannvorrichtung für das Werkzeug im Werkzeughalter von radial über der Scheibenperipherie liegend in die Revolverscheibe hinein, d.h. radial unter die Revolver-Scheibenperipherie, kann die radiale Länge des die Peripherie überragenden Teils des Werkzeughalters wesentlich verkürzt und damit Raum für eine grössere Länge des Werkzeugs gewonnen werden. Die Erfindung ermöglicht es auch, bestehende, bereits im Einsatz befindliche Revolverscheiben mit geringem mechanischem und folglich geringem finanziellen Aufwand nachträglich zu bearbeiten, damit die erfindungsgemässen Werkzeughalter eingesetzt werden können, durch die eine grössere Werkzeuglänge gewonnen wird. Die herkömmlichen vorhandenen Werkzeughalter können weiterhin eingesetzt werden.

Anhand eines illustrierten Ausführungsbeispiels wird die Erfindung näher erläutert. Es zeigen:
- Figur 1: eine stirnseitige Aufsicht auf eine Revolverscheibe mit einigen aufgesetzten unterschiedlichen Werkzeughaltern,
- Figur 2: eine Seitenansicht der Revolverscheibe in Figur 1 aus Richtung des Pfeils P,
- Figur 3: einen Teilquerschnitt durch die Revolverscheibe längs Linie III-III in Figur 1,
- Figur 4: einen Querschnitt längs Linie III-III in Figur 1, vor und nach dem Spannen des Werkzeugs bzw. Zustand während der Bearbeitung und
- Figur 5: einen Querschnitt längs Linie III-III in Figur 1, während des Spannens und Lösens des Werkzeugs.

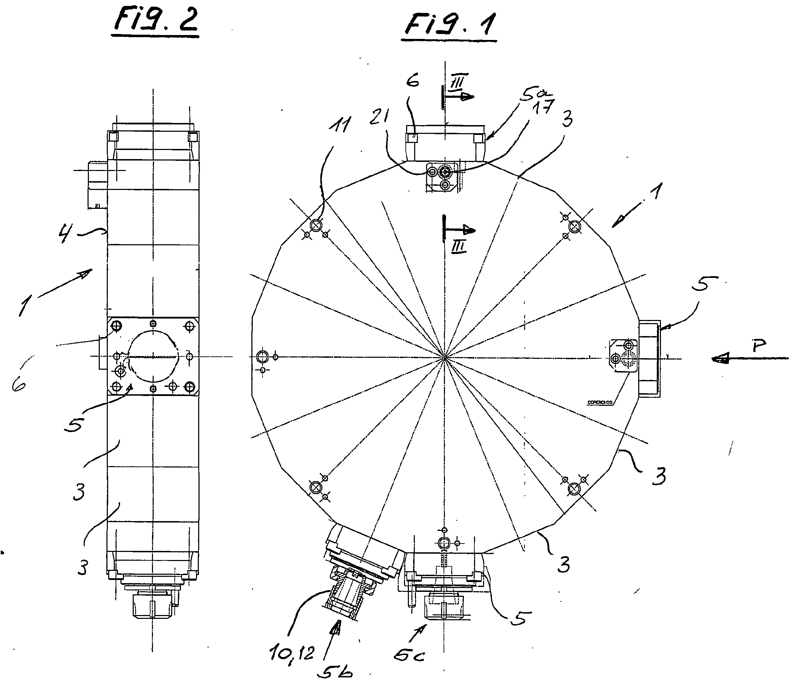

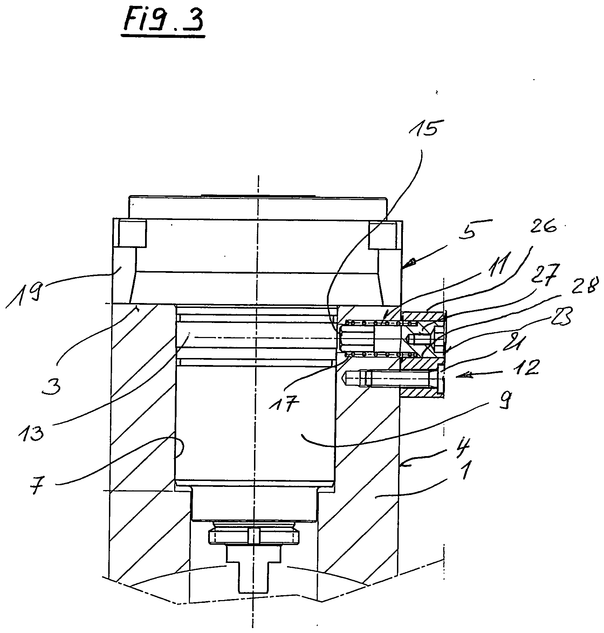

In den Figuren ist mit Bezugszeichen 1 eine Revolverscheibe, zum Beispiel eine BMT-Revolverscheibe, schematisch dargestellt. Die Peripherie der Revolverscheibe 1 ist im vorliegenden Beispiel mit 16 peripheren planen Auflageflächen 3 für Werkzeughalter 5a, 5b und 5c ausgebildet. Mit Referenz 5a ist ein Standardhalter ohne Werkzeug, jedoch mit erfindungsgemässen Bohrungen und einer Abdeckplatte für eine stirnseitige Spannung des Werkzeugs im Werkzeughalter 5 dargestellt. Mit 5b ist ein Standardhalter mit einem herkömmlichen Spannzangen-Werkzeughalter und mit 5c ein Standardhalter mit einem Werkzeughalter, der herkömmlich befestigt ist, obwohl in der Revolverscheibe 1 die erfindungsgemässen stirnseitigen Befestigungsmittel (Bohrungen) vorhanden sind, bezeichnet. Jeweils in der Mitte jeder der 16 Auflageflächen 3 ist eine radial zur Drehachse der Revolverscheibe 1 verlaufende Bohrung 7 in die Revolverscheibe 1 eingelassen (vgl. Figur 3). Die Bohrung 7 dient dazu, einen standardisierten zylindrischen Fortsatz 9 am jeweiligen Werkzeughalter 5 aufzunehmen. Die Werkzeughalter 5 (a-c) werden wie bisher mit Schrauben 6 in Gewindebohrungen auf den Auflageflächen 3 an der Revolverscheibe 1 befestigt, nachdem der Fortsatz 9 in die Bohrung 7 eingeführt ist. Bei den herkömmlichen Werkzeughaltern (in Figur 1 mit 5b bezeichnet) erfolgt das Festhalten/Klemmen eines Werkzeugs (Werkzeug nicht dargestellt) im Werkzeughalter 5 mit einer Spannzange 10, z.B. nach DIN 6499B, mit Spannelementen wie eine Spannmutter 12, welche Spannelemente die radial aussen liegende Fläche des Werkzeughalters 5 um mehrere Zentimeter überragen und dadurch die aktive Werkzeuglänge um den Betrag der axialen Länge der Spannzange 10 verkürzen.

Bei der erfindungsgemäss ausgebildeten Revolverscheibe 1 werden die Werkzeughalter 5 auf dieselbe Weise mit Schrauben 6 befestigt wie die herkömmlichen. Die Befestigung des Werkzeugs im Werkzeughalter 5 erfolgt durch eine innerhalb des Werkzeughalters 5a und 5c angeordnete Spannzange, die im unteren Teil des Werkzeughalters 5a,5c angeordnet ist und der innerhalb der Bohrung 7 und damit radial unterhalb der Stirnflächen 4 und folglich innerhalb der Revolverscheibe 1 liegt, mit einem Betätigungsschlüssel 27, an dessen vorderen Ende z.B. ein Mehrkant ausgebildet ist. Der Betätigungsschlüssel 27 ist axial verschiebbar in einer Führungsplatte 26 in einer dort ausgebildeten Führungsbohrung 28 verschiebbar gehalten.

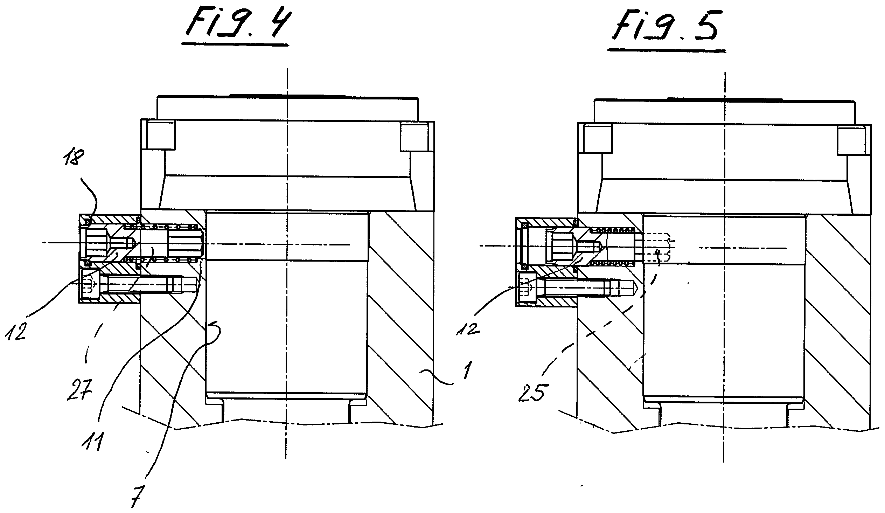

Eine Feder 17 liegt einerseits am Kopf des Betätigungsschlüssels 27 an und ist andererseits an einer Stufe in der Führungsbohrung 28 abgestützt. Ein Stopperelement 18 (Figur 4) hindert zudem den Betätigungsschlüssel 27 daran, aus der Führungsbohrung 28 auszufahren. Die Feder 17 hält den Betätigungsschlüssel 27 ausser Eingriff mit einem in die Bohrung 7 am Werkzeughalter 5 eingeführten Werkzeug.

Der Betätigungsschlüssel 27 durchdringt die Revolverscheibe 1 in einer Durchgangsbohrung 11, wenn er mit einem Drehwerkzeug, z.B. einem Imbusschlüssel (nicht dargestellt), axial gegen die Kraft der Feder 17 vorgeschoben wird.

Wenn also der Betätigungsschlüssel 27 gegen die Kraft der Feder 17 vorgeschoben wird, schiebt er das vordere Ende 25, das als Mehrkant, z.B. als Sechskant ausgebildet sein kann, vorerst nach vorn bis an die Peripherie des Fortsatzes 9 am Werkzeughalter 5a. Dann durchdringt er den Mantel des Fortsatzes 9 und greift danach in ein Exzenterelement an der Spannvorrichtung für das Werkzeug ein. Die Ausbildung der Spannvorrichtung ist der besseren Übersicht halber nicht dargestellt. Sie kann ähnlich aufgebaut sein wie herkömmliche Spannvorrichtungen oder Bohrfutter.

Durch eine Drehung des Betätigungsschlüssels 27 mit dem drehmoment-begrenzten Imbusschlüssel kann die Spannvorrichtung, die innerhalb des Fortsatzes 9 liegt und in den Figuren nicht dargestellt ist, ein in den Werkzeughalter 5 eingeführtes Werkzeug festspannen. Nach Beendigung einer Drehbewegung von beispielsweise 90° für die Spannung des Werkzeugs wird der Betätigungsschlüssel 27 bzw. dessen vorderes Ende 25 durch die Kraft der Feder 17 wieder radial aus der Spannvorrichtung und aus der Bohrung im Mantel des Fortsatzes 9 herausgezogen und gelangt dadurch ausser Eingriff mit dem Werkzeughalter 5a, so dass, falls das Werkzeug drehbar im Werkzeughalter 5a eingesetzt ist, dieses frei drehen kann.

Durch die Anordnung der Spannvorrichtung mit den darin angeordneten Spannelementen im Bereich des Fortsatzes 9 am Werkzeughalter 5a, welcher in die Bohrung 7 unter der Peripherie der Revolverscheibe 1 eingreift, vermindert sich die radiale Länge des Werkzeughalters 5a und damit vergrössert sich entsprechend die nutzbare Länge des Werkzeugs. An der Revolverscheibe 1 sind dazu einzig (pro Arbeitsplatz) drei Bohrungen notwendig, zwei als Gewindebohrungen für die Befestigung der Führungsplatte 26 mit den Schrauben 21 an der Stirnseite der Revolverscheibe 1 und eine, die grössere, für das Hindurchführen des Betätigungsschlüssels 27 und der an dessen vorderen Ende 25 ausgebildeten Eingriffselement.

Soll - weil bereits vorhanden - ein herkömmlicher Werkzeughalter 5b auf die erfindungsgemäss ausgebildete Revolverscheibe 1 aufgesetzt werden, so ist dies weiterhin möglich. Die Führungsplatte 26 mit der Betätigungsschraube 27 muss dazu nicht entfernt werden.

Es können auch bereits vorhandene Revolverscheiben 1 mit geringem Aufwand, nämlich durch nachträgliches Bohren von drei Löchern, umgerüstet werden. An solchen umgerüsteten oder an bereits werkseitig mit den Bohrungen versehenen Revolverscheiben 1 können demnach die erfindungsgemässen Werkzeughalter 5a oder die vorhandenen herkömmlichen Werkzeughalter 5b befestigt werden.

## Patentansprüche

1. Revolverscheibe (1) für eine Werkzeugmaschine zur Aufnahme einer Mehrzahl von Werkzeughaltern (5) für Bearbeitungswerkzeuge, umfassend auf der Peripherie der Revolverscheibe (1) ausgebildete Auflageflächen (3) für die Werkzeughalter (5), radial zur Drehachse der Revolverscheibe (1) verlaufende, jeweils in den Auflageflächen (3) eingelassene radial verlaufende Bohrungen (7) für die Aufnahme von Fortsätzen (9) an den Werkzeughaltern (5) und Gewindebohrungen in den Auflageflächen (3) zum Befestigen der Werkzeughalter (5) mit Schrauben (6) auf den Auflageflächen (3), sowie eine normal zur Drehachse der Revolverscheibe angeordnete Stirnfläche (4)
**dadurch gekennzeichnet, dass**
durch die Stirnfläche (4) der Revolverscheibe (1) führende und beabstandet zu den peripher liegenden Auflageflächen (3) angeordnete Durchgangsbohrungen (11) in die radial verlaufenden Bohrungen (7) für die Aufnahme der Fortsätze (9) an den Werkzeughaltern (5) ausgebildet sind, dass die Durchgangsbohrungen (11) zum Einführen von Betätigungsschlüsseln (27) ins Innere der Fortsätze (9) und zum Spannen von dort eingesetzten Spannmitteln zum Festklemmen der Werkzeuge an den Werkzeughaltern (5) ausgebildet sind, wobei in der Stirnfläche (4) neben den Durchgangsbohrungen (11) des Weiteren mindestens je eine Gewindebohrung für die Befestigung einer Führungsplatte (26) ausgebildet ist, wobei die Führungsplatte (26) eine Führungsbohrung (28) für die axiale Führung eines Betätigungsschlüssels (27) aufweist.

2. Revolverscheibe nach Anspruch 1, **dadurch gekennzeichnet, dass** in der Führungsbohrung (28) eine Feder (17) eingesetzt ist, welche den Betätigungsschlüssel (27) in unbelastetem Zustand ausser Eingriff mit dem Werkzeughalter (5) hält.

3. System umfassend die Revolverscheibe (1) nach einem der Ansprüche 1 oder 2 und die zu an der Revolverscheibe (1) befestigten Werkzeughalter (5), **dadurch gekennzeichnet, dass**
im Fortsatz (9) des Werkzeughalters (5) eine Spannvorrichtung für das Spannen und Halten eines Bearbeitungswerkzeugs im Werkzeughalter (5) angeordnet ist.

4. System nach Anspruch 3, **dadurch gekennzeichnet, dass** im Mantel des Fortsatzes (9) ein Loch ausgebildet ist, um das Hindurchführen des Betätigungsschlüssels (27) ins Innere des Fortsatzes (9) bis zur dort angeordneten Spannvorrichtung zu ermöglichen.

5. System nach Anspruch 4, **dadurch gekennzeichnet, dass** das Loch im Fortsatz (9) mit der zugeordneten Durchgangsbohrung (11) in der Revolverscheibe (1) fluchtet, wenn der Werkzeughalter (5) in die Revolverscheibe (1) eingesetzt ist.

## Claims

1. A revolver disc (1) for a tool machine for retaining a plurality of tool holders (5) for processing tools, comprising contact surfaces (3) for the tool holders (5) formed on the periphery of the revolver disc (1), bore holes (7) running radially to the pivot axis of the revolver disc (1), which are respectively embedded in the contact surfaces (3) for holding extensions (9) on the tool holders (5), and threaded bore holes in the contact surfaces (3) for attaching the tool holders (5) on the contact surfaces (3) with screws (6), and a front surface (4) arranged normally in relation to the pivot axis of the revolver disc
**characterized in that**
through-holes (11) which lead through the front surface (4) of the revolver disc (1) and which are arranged at a distance from the peripherally situated contact surfaces (3) are formed in the radially running bore holes (7) for retaining the extensions (9) on the tool holders (5), in such a manner that the through-holes (11) are designed for the introduction of actuation keys (27) into the interior of the extensions (9) and for the tensioning of the tensioning means inserted there for clamping the tools fast on the tool holders (5), wherein in the front surface (4) next to the through-bores (11), at least one threaded bore hole respectively is designed for the attachment of a guide plate (26), wherein the guide plate (26) comprises a guide bore hole (28) for axially guiding an actuation key (27).

2. The revolver disc according to claim 1, **characterized in that** in the guide bore hole (28), a spring (17) is inserted which in an unloaded state holds the actuation key (27) without engagement with the tool holder (5).

3. The system comprising the revolver disc (1) according to one of claims 1 or 2 and the tool holders (5) attached on the revolver disc (1), **characterized in that** in the extension (9) of the tool holder (5), a tensioning device is arranged for tensioning and holding a processing tool in the tool holder (5).

4. The system according to claim 3, **characterized in that** in the sheath of the extension (9), a hole is formed in order to enable the actuation key (27) to be guided through into the interior of the extension (9) up to the tensioning device arranged there.

5. The system according to claim 4, **characterized in that** the hole in the extension is in alignment with the assigned through bore (11) in the revolver disc (11) when the tool holder (5) is inserted into the revolver disc (1).

## Revendications

1. Tourelle revolver (1) pour une machine-outil pour l'accueil d'une multiplicité de porte-outils (5) pour outils d'usinage, comprenant des surfaces de support (3) formées sur la périphérie de la tourelle revolver (1) pour les porte-outils (5), des alésages (7) s'étendant radialement respectivement intégrés dans les surfaces de support (3), s'étendant radialement par rapport à l'axe de rotation de la tourelle revolver (1), pour l'accueil de prolongements (9) sur les porte-outils (5) et des alésages filetés dans les surfaces de support (3) pour la fixation des porte-outils (5) avec des vis (6) sur les surfaces de support (3), ainsi qu'une surface frontale (4) disposée
perpendiculairement à l'axe de rotation de la tourelle revolver,
**caractérisée en ce que**
des alésages traversants (11) passant à travers la surface frontale (4) de la tourelle revolver et disposés à distance des surfaces de support (3) se trouvant à la périphérie sont formés dans les alésages (7) s'étendant radialement pour l'accueil des prolongements (9) sur les porte-outils (5), **en ce que** les alésages traversants (11) sont formés pour l'introduction de clés d'actionnement (27) à l'intérieur des prolongements (9) et pour le serrage des éléments de serrage y étant intégrés pour le serrage des outils sur les porte-outils (5),
en outre, respectivement au moins un alésage fileté étant formé dans la surface frontale (4) pour la fixation d'une plaque de guidage (26), en plus des alésages traversants (11), la plaque de guidage (26) présentant un alésage de guidage (28) pour le guidage axial d'une clé d'actionnement (27).

2. Tourelle revolver selon la revendication 1, **caractérisée en ce que**, dans l'alésage de guidage (28), un ressort (17) est intégré, lequel maintient la clé d'actionnement (27) dégagée du porte-outil (5) en état non sollicité.

3. Système comprenant la tourelle revolver (1) selon l'une des revendications 1 ou 2 et les porte-outils (5) fixés sur la tourelle revolver (1), **caractérisé en ce qu'**un dispositif de serrage est disposé dans le prolongement (9) du porte-outil (5), pour le serrage et le maintien d'un outil d'usinage dans le porte-outil (5).

4. Système selon la revendication 3, **caractérisé en ce que**, dans l'enveloppe du prolongement (9), un trou est formé, afin de permettre l'introduction de la clé d'actionnement (27) à l'intérieur du prolongement (9) jusqu'au dispositif de serrage y étant disposé.

5. Système selon la revendication 4, **caractérisé en ce que** le trou dans le prolongement (9) est aligné avec l'alésage traversant dédié (11) dans la tourelle revolver (11) lorsque le porte-outil (5) est inséré dans la tourelle revolver (1).
